# EUROPÄISCHE PATENTANMELDUNG

(11) **EP 0 643 016 A1**
(43) Veröffentlichungstag der Anmeldung: **15.03.1995**
(21) Anmeldenummer: 94114485.9
(22) Anmeldetag: 15.09.1994
(51) Int. Cl.: C02F 1/32

(54) **Vorrichtung zum Desinfizieren und Entkeimen von Wasser durch UV Licht**

(30) Priorität: 15.09.1993 DE 9313991 U
(71) Anmelder: Müller, Hans, D-67305 Ramsen (DE)
(72) Erfinder: Müller, Hans, D-67305 Ramsen (DE)
(74) Vertreter: Mierswa, Klaus, Dipl.-Ing.

(57) **Zusammenfassung**

Die Erfindung betrifft eine Vorrichtung (1) zum Desinfizieren und Entkeimen von Wasser, vorzugsweise von Wasser, das sich in einem Boiler (20) oder Behälter befindet, mit einer ultraviolettes Licht aussendenden Lampe (11), die in das Wasser eintaucht. Innerhalb der Vorrichtung (1) ist ein opto-elektrischer Sensor (14) angeordnet, der sich im Strahlungsbereich der Lampe (11) befindet und der auf ultraviolettes Licht anspricht und der bei Ausfall der Strahlung der Lampe (11) ein Signal abzugeben imstande ist.

## Beschreibung

### Technisches Gebiet:

Die Erfindung betrifft eine Vorrichtung zum Desinfizieren und Entkeimen von Wasser, vorzugsweise von Wasser, das sich in einem Boiler oder Behälter befindet, mit einer ultraviolettes Licht aussendenden Lampe, die in das Wasser eintaucht, gemäß dem Oberbegriff des Anspruchs 1. Ebenso betrifft die Erfindung einen Boiler mit einer derartigen Vorrichtung gemäß Anspruch 9.

### Stand der Technik:

Aus Gründen der Energieeinsparung ist man heute bestrebt, die Temperatur von Warmwasseranlagen möglichst gering zu halten, was insbesondere dann sinnvoll ist, wenn dieselben mit Entkalkungsanlagen kombiniert sind. In Warmwasseranlagen, deren Zapftemperatur um 50 Grad Celsius liegt oder etwas darüber, insbesondere beim Gebrauch von Boilern oder Warmwasserspeicheranlagen, können jedoch gefährliche Krankheitskeime entstehen und sich vermehren, wie Legionellen, die in hohem Grad gesundheitsschädlich sein können.

Durch die DE-U-92 05 101.4 ist ein Behälter zum Filtern und Desinfizieren von verunreinigtem Wasser bekanntgeworden, der neben Aufnahmeräumen für Filterstoffe zum Filtern des Wassers eine ultraviolettes Licht aussendende Lampe aufweist, die vom an der Lampe vorbeifließenden Wasser benetzt wird. Auf diese Weise wird das Wasser in einer dünnen Schicht der Strahlung der Lampe ausgesetzt, wodurch im Wasser befindliche Keime abgetötet werden.

### Technische Aufgabe:

Der Erfindung liegt die Aufgabe zugrunde, eine Vorrichtung der eingangs genannten Gattung zu schaffen, mit der innerhalb eines geschlossenen Wasserbehälters, beispielsweise ein Boiler einer Warmwasserzapfanlage, eine einfache Desinfizierung und Entkeimung des Wassers möglich ist, wobei das Funktionieren der Vorrichtung überprüfbar sein soll; insbesondere soll die Vorrichtung zum nachträglichen Einbau in bestehende Anlagen und Boiler geeignet sein.

### Offenbarung der Erfindung und deren Vorteile:

Die Lösung der Aufgabe besteht erfindungsgemäß in einer Vorrichtung zum Desinfizieren und Entkeimen von Wasser, vorzugsweise von Wasser, das sich in einem Boiler oder Behälter befindet, mit einer ultraviolettes Licht aussendenden Lampe, die in das Wasser eintaucht, wobei innerhalb der Vorrichtung ein opto-elektrischer Sensor angeordnet ist, der sich im Strahlungsbereich der Lampe befindet und der auf ultraviolettes Licht anspricht und der bei Ausfall der Strahlung der Lampe ein Signal nach außerhalb abzugeben imstande ist. Weitere vorteilhafte Ausgestaltungen der Erfindung sind in den Unteransprüchen gekennzeichnet. Ein Boiler mit der erfindungsgemäßen Vorrichtung ist in Anspruch 9 gekennzeichnet.

Die erfindungsgemäße Vorrichtung besitzt den Vorteil, daß mit derselben innerhalb eines geschlossenen Wasserbehälters eine einfache Desinfizierung und Entkeimung des Wassers möglich ist, wobei vorteilhaft das Funktionieren der Vorrichtung überprüft werden kann. Denn bei Ausfall der UV-Lampe sendet der Sensor ein Signal nach außerhalb der Vorrichtung bzw. des Boilers oder Behälters, beispielsweise ein akustisches oder optisches Warnsignal, so daß die Vorrichtung überprüft werden kann. Das gleiche ist der Fall, wenn zum Beispiel der für UV-Licht durchlässige Zylinder trüb wird; ab einer bestimmten Trübung gibt der Sensor wiederum ein Warnsignal ab. Dadurch kann eine Warmwasserbereitungsanlage mit relativ geringer Zapftemperatur gefahren werden, beispielsweise um 50 Grad Celsius, ohne daß die Gefahr einer Keimbildung entsteht, so daß die Anlage aufgrund geringeren Energieverbrauchs wirtschaftlicher arbeitet, als bekannte Anlagen des Standes der Technik.

Ebenso kann der Sensor ein sich selbstüberprüfender Sensor sein, der bei seinem Ausfall ebenfalls ein Warnsignal nach außerhalb der Vorrichtung abzugeben imstande ist. Ein weiterer Vorteil besteht darin, daß die Vorrichtung zum nachträglichen Einbau in bestehende Anlagen geeignet ist und mit einfachen Mitteln nachträglich in einen Boiler oder einen Wasserbehälter eingebaut werden kann.

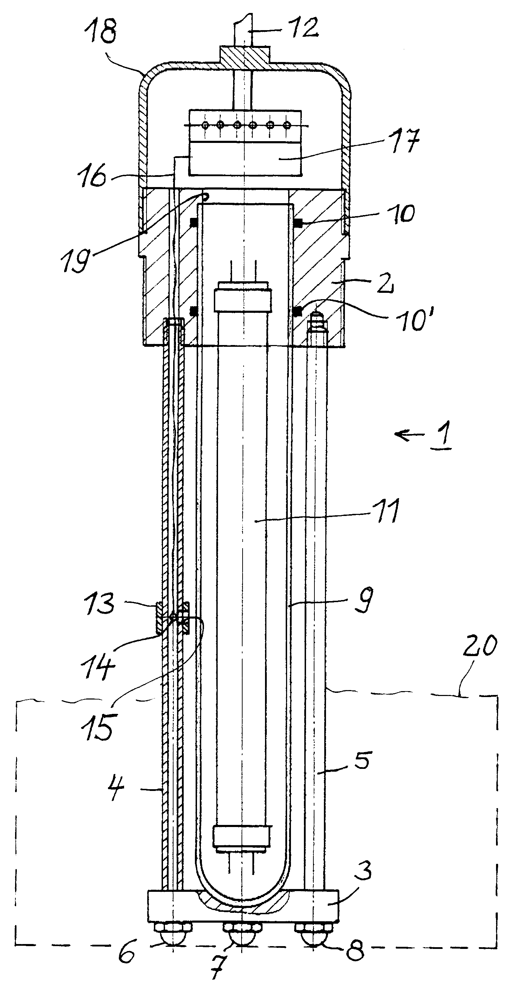

In der Zeichnung ist eine Beispiel einer Ansicht einer erfindungsgemäßen Vorrichtung dargestellt.

### Bevorzugte Ausführungsform der Erfindung:

Eine Vorrichtung 1 besteht aus einem vorzugsweise zylindrischen Kopfteil 2 und einem plattenförmigen Fußteil 3, die mittels zweier oder mehrerer Abstandsstäbe 4,5 beabstandet sind, wobei die Abstandsstäbe 4,5 mit einem Ende im Kopfteil 2 und mit dem anderen Ende in dem Fußteil 3 gehaltert sind. Beispielsweise besitzen die Abstandsstäbe 4,5 an ihren unteren Enden ein Außengewinde, wobei die Enden der Abstandsstäbe 4,5 durch Löcher innerhalb des Fußteils 3 gesteckt und von außen auf die Gewinde der Abstandsstäbe 4,5 Hutmuttern 6,7,8 aufgeschraubt sind. Zwischen dem Kopfteil 2 und dem Fußteil 3 sowie zwischen den Abstandsstäben 4,5 ist ein länglicher Zylinder 9 angeordnet, der in eine Bohrung 19 innerhalb des Kopfteils 2 ragt und dort mittels Dichtringen 10,10' abgedichtet gehaltert ist; das untere Ende des Zylinders 9 ist geschlossen. Mit dem unteren Ende des Zylinders 9 steht dieser auf dem Fußteil 3 auf, wobei der Zylinder mittels des Fußteils 3 und der auf die Abstandsstäbe 4,5 geschraubte Hutmuttern 6,7,8 in das Kopfteil 2 abdichtend gepreßt und gehaltert ist. Der Zylinder 9 besteht aus einem Material, welches für ultraviolettes Licht durchlässig ist. Innerhalb des Zylinders 9 ist eine längliche, ultraviolettes Licht erzeugende elektrische Stablampe 11 angeordnet, die innerhalb des Kopfteils 2 in geeigneter Weise gehaltert und an eine elektrische Anschlußleitung 12 von außen angeschlossen ist, über die die Stablampe mit elektrischer Energie versorgt wird.

Der Abstandsstab 4 ist als Rohr ausgeführt, wobei innerhalb des Rohres 4 ungefähr mittig zur Stablampe 11 ein Sensor 14 angeordnet ist, der auf ulatraviolettes Licht anspricht und der bei Empfang von ultraviolettem Licht und oder bei Ausfall der ultravioletten Strahlung ein Signal über eine Meldeleitung 16 abzugeben imstande ist. Der Sensor ist vorzugsweise ein opto-elektronischer Sensor, der bei seinem Ansprechen ein elektrisches Signal abzugeben imstande ist. Vor dem Sensor 14 in Richtung zur Stablampe 11 ist innerhalb der Wandung des Rohres 4 ein Loch 15 angeordnet, so daß die ultraviolette Strahlung auf den Sensor 14 gelangen kann. Das Loch 15 bzw. Fenster innerhalb der Wandung des Rohres 4 bzw. des Abstandsstabes 4 ist mit einer Manschette 13 abgedeckt, deren Wandung wenigstens im Bereich des Loches 15 für ultraviolette Strahlung durchlässig ist; vorzugsweise ist die Manschette 13 auf das Rohr 4 im Bereich des Loches 15 bzw. des Sensors 14 aufgeklebt, so daß das Rohr 4 abgedichtet gegen die Umgebung ist, insbesondere gegen Wasser. Die Meldeleitung 16 vom Sensor 14, der vorzugsweise eine Diode für ultravioletten Licht mit einer elektrischen Meldeleitung ist, führt in eine elektrische Überwachungseinrichtung 17 innerhalb der Vorrichtung 1, von der innerhalb der Anschlußleitung 12 eine Signalleitung nach außen geführt ist, die zu einer nichtgezeigten optischen oder akustischen Warneinrichtung führen kann. Der Kopfteil 2 ist mittels einer haubenartigen Abdeckung 18 abgedeckt, innerhalb der sich auch die elektrische Überwachungseinrichtung sowie die Zuführeinrichtungen für die Spannungsversorgung der Stablampe 11 befinden.

Die Vorrichtung 1 kann in einfacher Weise in einen Boiler 20 getaucht oder eingesteckt sein, wobei wenigstens die Stablampe 11 bzw. der Zylinder 9 im unter dem Wasserspiegel angeordnet sind. Aus dem Boiler 20 führt vorzugsweise nur die Anschlußleitung 12 der Vorrichtung 1 nach außen.

Die Abstandsstäbe 4,5 - wobei im gezeigten Beispiel 3 Abstandsstäbe vorhanden sind, deren mittlerer Abstandsstab durch den Zylinder 9 und die Lampe 11 verdeckt ist - sind so dünn wie möglich ausgeführt, damit nur ein kleinstmöglicher Strahlungsbereich der UV-Lampe 11 durch die Abstandsstäbe 4,5 abgeschattet wird.

Der Sensor 14 für das UV-Licht kann auch ungefähr mittig innerhalb des Zylinders 9 angeordnet sein. Ebenso kann der Sensor 14 sich selbstüberprüfend ausgeführt sein und bei seinem Ausfall ebenfalls ein Warnsignal nach außerhalb der Vorrichtung abgeben.

### Gewerbliche Anwendbarkeit:

Der Gegenstand der Erfindung ist insbesondere auf wasser- und sanitärhygienischen Gebieten anwendbar, indem die erfindungsgemäße Vorrichtung innerhalb eines geschlossenen Wasserbehälters eine einfache Desinfizierung und Entkeimung des Wassers ermöglicht, wobei vorteilhaft das Funktionieren der Vorrichtung überprüft werden kann. Denn bei Ausfall der UV-Lampe sendet der Sensor ein Signal nach außerhalb der Vorrichtung bzw. des Boilers oder Behälters, so daß die Vorrichtung überprüft werden kann. Mittels der Vorrichtung kann eine Warmwasserbereitungsanlage mit relativ geringer Zapftemperatur gefahren werden, beispielsweise um 50 Grad Celsius, ohne daß die Gefahr einer Keimbildung, insbesondere Legionellen, entsteht, so daß die Anlage aufgrund geringeren Energieverbrauchs auch wirtschaftlicher arbeitet, als vergleichbare Anlagen des Standes der Technik. Vorteilhaft ist die Vorrichtung zum nachträglichen Einbau in bestehende Anlagen geeignet und kann mit einfachen Mitteln nachträglich in einen Boiler oder einen Wasserbehälter eingebaut werden.

### Liste der Bezugszeichen:

- 1: Vorrichtung
- 2: Kopfteil
- 3: Fußteil
- 4,5: Abstandsstäbe
- 6,7,8: Hutmuttern
- 9: Zylinder
- 10,10': Dichtringe
- 11: UV-Lampe
- 12: Anschlußleitung
- 13: Manschette
- 14: Sensor
- 15: Loch
- 16: Leitung
- 17: elektrische Überwachungseinrichtung
- 18: Abdeckung
- 19: Bohrung
- 20: Boiler

## Patentansprüche

1. Vorrichtung (1) zum Desinfizieren und Entkeimen von Wasser, vorzugsweise von Wasser, das sich in einem Boiler (20) oder Behälter befindet, mit einer ultraviolettes Licht aussendenden Lampe (11), die in das Wasser eintaucht, dadurch gekennzeichnet,
daß innerhalb der Vorrichtung (1) ein opto-elektrischer Sensor (14) angeordnet ist, der sich im Strahlungsbereich der Lampe (11) befindet und der auf ultraviolettes Licht anspricht und der bei Ausfall der Strahlung der Lampe (11) ein Signal, vorzugsweise ein akustisches oder optisches Warnsignal, abzugeben imstande ist.

2. Vorrichtung (1) nach Anspruch 1, dadurch gekennzeichnet,
daß die Lampe eine Stablampe (11) und innerhalb eines Zylinders (9) angeordnet ist, der für ultraviolettes Licht durchlässig ist, wobei sich der Sensor (14) außerhalb des Zylinders (9) im Strahlungsbereich der Stablampe (11) befindet.

3. Vorrichtung (1) nach Anspruch 1 oder 2, dadurch gekennzeichnet,
daß der Zylinder (9) an beiden Enden gehaltert ist, wobei der Sensor (14) ungefähr mittig des Zylinders (9) außerhalb desselben angeordnet ist.

4. Vorrichtung (1) nach Anspruch 1 oder 2, dadurch gekennzeichnet,
daß der Zylinder (9) an beiden Enden gehaltert ist, wobei der Sensor (14) ungefähr mittig des Zylinders (9) innerhalb desselben angeordnet ist.

5. Vorrichtung (1) nach Anspruch 3, dadurch gekennzeichnet,
daß der Zylinder (9) zwischen einem Kopfteil (2) und einem Fußteil (3) angeordnet ist, die mittels Abstandsstäben (4,5) beabstandet sind, die mit ihren Enden sowohl im Kopfteil (2), als auch im Fußteil (3) gehaltert sind, wobei der Sensor (14) an einem der Abstandsstäbe (4,5) angeordnet ist.

6. Vorrichtung (1) nach Anspruch 5, dadurch gekennzeichnet,
daß einer der Abstandsstäbe (4,5) als Rohr ausgeführt ist, innerhalb desselben der Sensor (14) angeordnet ist, wobei sich in der Wandung des Rohres (4,5) zwischen dem Sensor (14) und dem Zylinder (9) bzw. der Lampe (11) ein Loch bzw. ein Fenster für den Durchtritt des ultravioletten Lichtes befindet.

7. Vorrichtung (1) nach einem der vorherstehenden Ansprüche, dadurch gekennzeichnet,
daß der Sensor eine auf ultraviolettes Licht ansprechende Diode (14) ist, deren elektrische Meldeleitung (16) nach außerhalb der Vorrichtung (1) geführt ist und die bei Ausfall der ultravioletten Strahlung der Stablampe (11) ein Warnsignal abzugeben imstande ist.

8. Vorrichtung (1) nach einem der vorherigen Ansprüche,
dadurch gekennzeichnet,
daß der Sensor (14) sich selbstüberprüfend ist und bei seinem Ausfall ebenfalls ein Warnsignal nach außerhalb der Vorrichtung abzugeben imstande ist.

9. Vorrichtung (1) nach Anspruch 6, dadurch gekennzeichnet,
daß das Loch (15) bzw. Fenster innerhalb der Wandung des Rohres (4) bzw. des Abstandsstabes (4) mit einer Manschette (13) abgedeckt ist, deren Wandung wenigstens im Bereich des Loches (15) bzw. Fensters für ultraviolette Strahlung durchlässig ist, wobei die Manschette (13) vorzugsweise auf das Rohr (4) im Bereich des Loches (15) bzw. des Sensors (14) aufgeklebt ist.

10. Wasserbehälter oder Boiler (20),
dadurch gekennzeichnet,
daß innerhalb des Wasservolumens desselben eine Vorrichtung (1) zum Desinfizieren und Entkeimen des Wassers sich befindet, mit einer ultraviolettes Licht aussendenden Lampe (11), die in das Wasser eintaucht, wobei innerhalb der Vorrichtung (1) ein opto-elektrischer Sensor (14) angeordnet ist, der sich im Strahlungsbereich der Lampe (11) befindet und der auf ultraviolettes Licht anspricht und der bei Ausfall der Strahlung der Lampe (11) ein Signal nach außerhalb des Wasserbehälters oder Boilers (20) abzugeben imstande ist.
